**Europäisches Patentamt**

**European Patent Office**

**Office européen des brevets**

(19)

(11) Veröffentlichungsnummer : **0 258 693 B1**

(12)

# EUROPÄISCHE PATENTSCHRIFT

(45) Veröffentlichungstag der Patentschrift :
06.02.91 Patentblatt 91/06

(51) Int. Cl.$^5$ : **C07F 9/50**

(21) Anmeldenummer : **87111614.1**

(22) Anmeldetag : **11.08.87**

(54) Verfahren zur Herstellung von tertiären Alkylphosphanen.

(30) Priorität : **28.08.86 DE 3629189**

(43) Veröffentlichungstag der Anmeldung :
**09.03.88 Patentblatt 88/10**

(45) Bekanntmachung des Hinweises auf die Patenterteilung :
**06.02.91 Patentblatt 91/06**

(84) Benannte Vertragsstaaten :
**BE CH DE FR GB IT LI NL**

(56) Entgegenhaltungen :
**EP-A- 0 026 278**

(73) Patentinhaber : **HOECHST AKTIENGESELLSCHAFT**
**Postfach 80 03 20**
**D-6230 Frankfurt am Main 80 (DE)**

(72) Erfinder : **Weferling, Norbert, Dr.**
**Schaesbergstrasse 13**
**D-5030 Hürth (DE)**
Erfinder : **Elsner, Georg, Dr.**
**Dr.-Krauss-Strasse 3**
**D-5030 Hürth (DE)**
Erfinder : **Stephan, Hans-Werner, Dl.**
**Henriette-Lott-Weg 12**
**D-5030 Hürth (DE)**
Erfinder : **Frorath, Friedrich-Karl, Dr.**
**Dr.-Krauss-Strasse 7**
**D-5030 Hürth (DE)**

## Beschreibung

Die vorliegende Erfindung betrifft ein Verfahren zu Herstellung von tertiären Alkylphosphanen der allgemeinen Formel $R_3P$, in der R gleiche oder verschieden, geradkettige, unsubstituierte Alkylreste mit 3-20, vorzugsweise 4-10, C-Atomen bedeuten, wobei jedoch ein Alkylrest auch ein sekundärer Butylrest sein kann, durch Umsetzung von Phosphorwasserstoff $PH_3$ mit dem bzw. den entsprechenden Alkenen, gegebenenfalls in deren stöchiometrischem Überschuß, bei erhöhter Temperatur und erhöhtem Druck sowie in Gengenwart von Radikalbildnern.

Aus der DE-PS 899 040 ist es bereits bekannt, äquivalente Mengen von Phosphorwasserstoff mit Olefinen bei erhöhter Temperatur in Gegenwart eines peroxidischen Katalysators umzusetzen. Entsprechend Beispiel 2 wird dabei ein Gemisch aus etwa 85 Gew% Trialkylphosphin und etwa 15 Gew% Mono- bzw. Dialkylphosphin erhalten.

Aus dem Journal of Organic Chemistry (1961), Bd. 26, Seite 5139 ist weiter bekannt, daß durch die Verwendung eines stöchiometrischen überschusses von Phosphorwasserstoff die Bildung des Trialkylphosphans erniedrigt wird, zugunsten einer Di- bzw. Monoalkylphosphan-Bildung.

Die DE-PS 27 03 802 beschreibt ein Verfahren zur Herstellung organischer Phosphine aus Alken-Lösungen und Phosphorwasserstoff, der in überstöchiometrischen Mengen vorliegt, in einem kontinuierlich betriebenen Druckreaktor. Beim Verfahren der DE-OS 29 36 210 wird zur Herstellung tertiärer Phosphine ebenfalls in Gegenwart inerter Lösungsmittel wie Toluol sowie unter Druck, bei erhöhter Temperatur und unter Verwendung von Azo-bis-isobutyronitril in Toluol als Starter-Lösung gearbeitet.

Gemäß EP-00 95 453 A2 wird schließlich Phosphorwasserstoff bei 85°C - 90°C mit Buten-2 unter Verwendung von Azo-diisobutyronitril, gelöst in Toluol, als Radikalbildner umgesetzt.

Alle diese Verfahren haben erhebliche Nachteile. So erfordert das bisher allgemein als Radikalbildner verwendete Azobisisobutyronitril (ABIN) den Einsatz artfremder Lösungsmittel. Als solche sind für ABIN jedoch nur Toluol oder Benzol geeignet, in denen diese Starter- oder Initiatorkomponente gelöst ist. Auch bildet sich durch Zersetzung als Spaltprodukt von ABIN in nachteiliger Weise das Tetramethylbernsteinsäuredinitril, das sehr giftig ist ($LD_{50}$ per inhal. 6 mg/kg Ratte (30 Stunden) ; oral etwa 25 mg/kg Ratte). Der Einsatz artfremder Lösungsmittel erfordert zusätzliche Lagerbehälter, Pumpen, Dosiervorrichtungen sowie Destillationseinrichtungen zur Wiedergewinnung ; dieser Investitionsaufwand ist beträchtlich.

Die aufgezeigten Nachteile der vorbekannten Verfahren werden gemäß vorliegender Erfindung in überraschender Weise dadurch überwunden, daß nunmehr unter Auschluß eines artfremden Lösungsmittels und in Gegenwart von 2,2'-Azobis-(2-methylbutyronitril) als Radikalbildner gearbeitet wird, wobei in 2 studen geosteitet wird, wenn der Alkylsest ein sekundarer Butylnest ist.

Die oben aufgeführten Nachteile werden durch diese erfindungsgemäßen Maßnahmen behoben. Zusätzliche Investitionskosten entfallen durch den Verzicht auf artfremde Lösungsmittel und dadurch erzielter Vermeidung von deren Aufarbeitung. Der Initiatoreinsatz ist geringer ; er betrug beim ABIN etwa 3 Mol%, bezogen auf $PH_3$, beim erfindungsgemäß gebrauchten 2,2'-Azobis-(2-methylbutyronitril) (VAZO® 67, Firma E.I. DuPont de Nemours & Company, Wilmington, USA) liegt er bei 1-2 Mol%, bezogen auf $PH_3$. Die Raum-Zeit-Ausbeute erhöht sich damit im Durchschnitt um den Faktor 2. Lediglich bei der Umsetzung von z.B. sek-Butylphosphan mit n-Alkenen in einer sekundären Reaktionsstufe sind größere Mengen des neuen Starters erforderlich ; dies galt jedoch auch bei Verwendung des herkömmlichen ABIN.

Gegenstand der Erfindung sind auch die folgenden Maßnahmen :

Beim Verfahren zur Herstellung von tertiären Alkylphosphanen mit geradkettigen Alkylresten wird die Umsetzung von Alken-1 bzw. Alken-1-Gemischen mit $PH_3$ in einem stöchiometrischen Verhältnis von 3 : 1 bis 5 : 1, unter einem Druck von 1-80 bar, bei einer Temperatur von 75-95°C während einer mittleren Reaktionsdauer von 4-24 Stunden sowie in Gegenwart von 0,1-2 Mol% 2,2'-Azobis-(2-methylbutyronitril), bezogen auf $PH_3$, vorgenommen, worauf das rohe Trialkylphosphan destillativ aufgearbeitet wird.

Andererseits wird beim Verfahren zur Herstellung von tertiären Alkylphosphanen, bei welchen ein Alkylrest ein sekundärer Butylrest ist, in zwei Stufen gearbeitet, derart daß zunächst die Umsetzung von Buten-2 mit $PH_3$ in einem stöchiometrischen Überschuß von 0-400 Mol% Buten-2, bezogen auf $PH_3$, unter einem Druck von 35 bis 180 bar, bei einer Temperatur von 90-120°C während einer mittleren Reaktionsdauer von 0,1-7 Stunden sowie in Gegenwart von 1-2 Mol% 2,2'-Azobis-(2-methylbutyronitril), bezogen auf $PH_3$, erfolgt, worauf das destillativ gereinigte s-Butylphosphan mit Alken-1 bzw. Alken-1-Gemischen in einem stöchiometrischen Überschuß von 0-1000 Mol% Gesamt-Alken-1, bezogen auf s-Butylphosphan, unter einem Druck von 1-3 bar, bei einer Temperatur von 75-95°C während einer mittleren Reaktionsdauer von 4-24 Stunden sowie in Gegenwart von 2-6 Mol% 2,2'-Azobis-(2-methylbutyronitril), bezogen auf s-Butylphosphan, umgesetzt und dann das rohe Trialkylphosphan in Form von s-Butyl-di-n-alkylphosphan destillativ aufgearbeitet wird.

Gemäß weiteren Gedanken der vorliegenden Erfindung können in vorteilhafter Ausführungsform
a) die Reaktions- und Destillationszonen kontinuierlich betrieben werden ;
b) das 2,2'-Azobis-(2-methylbutyronitril) im dem Ausgangsprodukt entsprechenden Alken bzw. im dem etwaigen Zwischenprodukt entsprechenden s-Butylphosphan gelöst eingesetzt werden, wodurch artfremde Lösungsmittel auch insoweit ausgeschlossen werden ;
c) das 2,2'-Azobis-(2-methylbutyronitril) als 0,01-3,0 gewichts%ige Lösung, vorzugsweise als die olefinische Lösung, eingesetzt werden ; und schließlich
d) die in den Destillationszonen abgetrennten, nicht umgesetzten Mengen an $PH_3$, Buten-2 oder Alken-1 in die jeweilige Reaktion zurückgeführt werden.

Die nachfolgenden Beispiele sollen die Erfindung näher erläutern, ohne daß diese jedoch auf den Gegenstand der erfindungsgemäßen Ausführungsbeispiele beschränkt ist.

Beispiel 1 (Stand der Technik)

Herstellung vom Tributylphosphan im Autoklav

Ein 90 1-Autoklav wurde nacheinander mit 9,6 kg (170 Mol) Buten-1 und 1,75 kg (51 Mol) $PH_3$ beschickt. Man heizte den Autoklav auf 80°C auf und begann mit der Dosierung von Toluol/ABIN-Lösung. Über einen Zeitraum von 2 1/2 Std. wurden 12 l Toluol, in denen 170 g ABIN (2 Mol%, bez. auf $PH_3$) gelöst waren, in der Weise in den Reaktor gepumpt, daß die Temperatur der Reaktionsmischung 100°C nicht überstieg. Nach 7 1/2 Std. Reaktionszeit ließ man abkühlen, entspannte und füllte das Rohprodukt (18,3 kg) in ein mit Stickstoff gespültes Faß.

Die $^{31}$P-NMR-Analyse ergab folgende Zusammensetzung :

```
Tributylphosphan:        93,4 Mol%, bezogen auf den
                                    Gesamt-P-Gehalt

Dibutylphosphan:          4,6 Mol%

Monobutylphosphan:        1,7 Mol%

unbekannte Komponenten:   0,3 Mol%
```

Elementaranalytisch wurde ein P-Gehalt im Rohprodukt von 6,7 Gew% gefunden. Das entspricht einem Umsatz von 1,2 kg des eingesetzten $PH_3$ (71% d. Th.).

Beispiel 2 (Stand der Technik)

Halbkontinuierliche Herstellung von Tributylphosphan

In einer Technikumsapparatur, bestehend aus ABIN/Toluol-Vorratsbehälter und Dosierpumpe, Buten-1-Vorratsbehälter und Dosierpumpe, Hochdruckrohr (12 1-Füllvolumen) und 800 1-Edelstahlrührkessel, wurden innerhalb von 15 Std. kontinuierlich 36 kg $PH_3$, 248 l Toluol/ABIN-Lösung (2 Gew% ABIN) sowie 211,5 kg Buten-1 in das Hochdruckrohr eingespeist. Der Druck betrug dabei zwischen 35 und 39 bar. Die Reaktion wurde durch Beheizung des oberen Teils der Kolonne mit Dampf (3 bar) gestartet. Daraufhin stellten sich im mittleren Teil der Kolonne Temperaturen von 125-140°C und im unteren Teil Temperaturen von 100-120°C ein. Die Rohproduktlösung wurde füllstandsgesteuert in den Edelstahlreaktor abgetaktet, der mit 2 kg festem Starter beschickt und auf 90°C beheizt war. Nachdem die o.g. Mengen vollständig in den Rührkessel überführt waren, ließ man noch 7 Std. bei 90°C und 11-12 bar Druck nachreagieren. Nach dem Entspannen wurden 466 kg Rohproduktlösung erhalten. Die $^{31}$P-NMR-Analyse ergab folgende Verteilung der phosphorhaltigen Produkte :

```
Tributylphosphan:        95,5 Mol%, bezogen auf den
                                    Gesamt-P-Gehalt

Dibutylphosphan:          2,8 Mol%

Monobutylphosphan:        0,5 Mol%

unbekannte Komponenten:   1,2 Mol%
```

Nach destillativer Aufarbeitung des Rohmaterials wurden 203 kg reines Tributylphosphan erhalten (91%, bez. auf eingesetztes $PH_3$). Kp 108-112°C/10 mbar.

Beispiel 3 (erfindungsgemäß)

Halbkontinuierliche lösemittelfreie Herstellung von Tributylphosphan

In einem 300 1-Druckreaktor wurde eine Lösung aus 180 kg Buten-1 und 2,8 kg 2,2'-Azobis-(2-methyl-butyronitril) (VAZO® 67) hergestellt. Mit einem Volumenstrom von ca. 30 1/h dosierte man diese Lösung in die auf 90°C beheizte obere Reaktionszone des in Beispiel 2 beschriebenen Druckrohres. Gleichzeitig wurde $PH_3$ in die Hochdruckkolonne eingespeist (ca. 2,1 m³/h). Der Druck stellte sich auf 36 bar ein.

Durch entsprechende Temperierung der Hiez- bzw. Kühlmantelsegmente des Reaktionsrohres sorgte man dafür, daß die Reaktionstemperatur 90°C nicht überschritt. Die Reaktionslösung wurde in den auf 85°C beheizten Rührkessel abgetaktet. Nach 9,1 Std. war der Buten/Starter-Vorratsbehälter leergefahren und die $PH_3$-Zufuhr zum Druckrohr wurde gestoppt. Man ließ die Reaktionsmischung im Rührkessel noch 7 Std. bei 11 bar nachreagieren, kühlte ab und entspannte. Rohausbeute : 194 kg. Die $^{31}$P-NMR-Analyse ergab folgende Daten :

```
Tributylphosphan    (-  32,4 ppm, - 19,3 ppm):  98,5 Mol%

Dibutylphosphan     (-  69,3 ppm):               0,4 Mol%

Monobutylphosphan   (- 138,8 ppm):               0,3 Mol%

unbekannte Komponenten:                          0,8 Mol%
```

Die destillative Aufarbeitung des Rohproduktes ergab 154 kg reines Tributylphosphan (Kp 105-112°C/12 mbar). Ausbeute : 96%, bez. auf eingesetztes $PH_3$.

Beispiel 4

Kontinuierliches Verfahren zur Herstellung von Trioctylphosphan

6,0 kg/h $PH_3$ (177 Mol/h) wurden aus einem Vorratsbehälter über einen Kompressor auf ca. 20 bar verdichtet und der oberen, gekühlten Zone einer Druckkolonne zugeführt. Gleichzeitig wird eine Lösung von 2,2'-Azobis-(2-methylbutyronitril) (VAZO® 67) in Octen-1 (79,4 kg/h, davon 0,4 kg = 2 Mol VAZO® 67) aus einem Vorratsbehälter der Druckkolonne als Reaktor zugeführt.

Die Reaktionstemperatur in der Druckkolonne wurde durch Kühlung zwischen 80 und 85°C gehalten. Das Rohprodukt wurde füllstandsgesteuert aus der Druckkolonne in einen Druckrührkessel überführt, der bei einem Druck von 3 - 4 bar und 80°C betrieben wurde. Die Reaktionsmischung gelangte wiederum füllstandsgesteuert in einen weiteren Rührkessel. Die Volumina von Druckkolonne, Druckrührkessel und Rührkessel waren so bemessen, daß die zu vollständigen Zerfall des Initiators bei 80°C notwendige Verweilzeit von ca. 10 Std. eingehalten werden konnte. Das Rohprodukt (Trioctylphosphan, Octen) wurde kontinuierlich in eine Leichtsieder-Destillationskolonne entspannt, in der bei einem Vakuum von 200 mbar und 160-180°C die Abtrennung des überschüssigen Octens erfolgte. Octen wurde kondensiert, rezirkuliert und erneut zur Anmischung der Starter/Octen-Lösung verwendet. Das Sumpfprodukt wurde über ein Ventil aus der Destillationskolonne abgetaktet. Eine aus der Sumpfproduktleitung gezogene Probe ergab folgende Analysenwerte (GC) :

```
Starter-Zerfallsprodukt:  0,6 % Fläche/Fläche

Octen-1:                  0,5 % Fläche/Fläche

Trioctylphosphan:        98,9 % Fläche/Fläche
```

$^{31}$P-NMR-spektroskopisch konnte kein Mono- und Dioctylphosphan nachgewiesen werden.

Beispiel 5 (erfindungsgemäß)

a) Kontinuierliche Herstellung von sek-Butylphosphan

11,1 kg/h $PH_3$ (326 Mol/h) wurden über einen doppelstufigen Kompressor auf 110 bar verdichtet und einem Hochdruck-Reaktionsrohr (V = 12 l) zugeführt. Gleichzeitig wurden 8,9 kg/h Buten-2 (cis/trans-Gemisch, 159 Mol/h), in denen pro kg 30 g 2,2'-Azobis-(2-methylbutyronitril) (VAZO® 67) gelöst sind, aus einem Vorratsbehälter mittels einer Membrandosierpumpe in das Reaktionsrohr gefördert. Das Gemisch wurde durch Beheizung der Reaktionszone, in welcher die Komponenten eingespeist werden, auf 90°C zur Reaktion gebracht. Die einsetzende exotherme Reaktion wurde mittels Wasserkühlung so gesteuert, daß eine max. Temperatur von 110°C nicht überschritten wurde. Die Ausschleusung des Rohprodukts erfolgte füllstandsgesteuert über ein Abtaktventil. Der mittlere Füllstand betrug etwa 75%. Daraus errechnet sich bei einer mittleren Dichte von 0,7 g/cm³ eine durchschnittliche Verweilzeit von etwa 46 Minuten.

Das Produkt gelangte nach Abtaktung in ein Entspannungsgefäß, wobei die Hauptmenge das nicht umgesetzten $PH_3$ sowie ein Teil des Buten-2 gasförmig entwichen. Die flüssige Phase wurde auf eine Trennkolonne aufgegeben, in der restliche Leichtsieder ($PH_3$/Buten) entfernt wurden. Die vereinigten Gasströme aus dem Entspannungsgefäß und der Kolonne wurden durch einen Wärmetauscher geleitet, der durch eine Solekühlung auf -15 bis -20°C gehalten wurde. Das Buten-2 kondensierte und wurde in den Buten-Vorratsbehälter zurückgeführt. Das unter diesen Bedingungen nicht kondensierbare $PH_3$ wurde auf die Saugseite des Kompressors zurückgeführt. Während der Anfahrphase wurde ein $PH_3$ : Buten-2-Molverhältnis von etwa 2 : 1 eingestellt. Unter diesen Reaktionsbedingungen ergab sich eine Umsetzung von 27%, bezogen auf eingesetztes $PH_3$, und von 56%, bezogen auf Buten-2.

Eine ³¹P-NMR-Analyse des Sumpfproduktes ergab folgende Werte :

```
sek-Butylphosphan:        95,3 Mol% (d/P = - 114,7 ppm)
Di-sek-Butylphosphan:      4,4 Mol% (d/P = -  23,6/- 28,7/
                                         -  34,0 ppm)
unbekannte Komponenten:    0,3 Mol%
```

b) Vergleichsbeispiel

Unter denselben Bedingungen wie oben beschrieben wurde anstelle von Buten-2 nunmehr Buten-1 mit $PH_3$ umgesetzt. Die Produktanalyse (³¹P-NMR) ergab folgende Werte :

```
n-Butylphosphan:          45,2 Mol%
Di-n-Butylphosphan:       34,3 Mol%
Tri-n-Butylphosphan:      20,5 Mol%
```

Der Umsetzungsgrad, bezogen auf Buten-1, war 90,8%.

c) Kontinuierliche Herstellung von sek-Butyldioctylphosphan

Das nach a) erzeugte Sumpfprodukt wurde in zwei hintereinandergeschalteten, druckfesten 640 l-Rührkesseln mit Octen-1 zum tert. Phosphan umgesetzt. Dazu wurden dem ersten Reaktor zusammen mit dem abgetakteten Sumpfprodukt der Trennkolonne 102 kg/h einer 1 gewichts%igen Lösung von VAZO® 67 in Octen-1 über eine Dosierpumpe zugeführt.

Die Füllstände in beiden Reaktoren waren geregelt. Die Temperaturen betrugen min. 75°C und max. 85°C. Die Reaktion wurde unter einem Druck von 1,1-1,5 bar durchgeführt, der durch den beim Starterzerfall (VAZO® 67) entstehenden Stickstoff hervorgerufen wurde. Das Rohprodukt wurde in eine Destillationskolonne eingespeist, in der bei Normaldruck und Sumpftemperaturen von ca. 210°C (16 bar Dampfheizung) das überschüssige Octen abgetrennt wurde. Das Olefin wurde zu dem Ansatzbehälter zur Herstellung der Starter-Octen-Mischung zurückgeführt.

Eine Analyse des aus dem Sumpf der Trennkolonne abgezogenen Produkts ergab folgende Werte :

$^{31}$P-NMR:    94,6 Mol% sek-Butyldioctylphosphan    $Bu^SOct_2P$

2,2 Mol% Di-sek-Butyloctylphosphan    $Bu_2^SOctP$

2,2 Mol% Di-sek-Butylphosphan    $Bu_2^SPH$

0,7 Mol% sek-Butyloctylphosphan    $Bu^SOctPH$

0,3 Mol% unbekannte Komponenten

GC-Analyse:    93,1 % Fläche/Fläche sek-Butyldioctylphosphan

3,0 % Diethyl-dimethylbernsteinsäuredinitril

(Starter-Zerfallsprodukt)

1,7 % Di-sek-Butyloctylphosphan

1,0 % Di-sek-Butylphosphan

0,6 % Octen-1

0,3 % sek-Butyloctylphosphan

0,3 % unbekannte Komponenten

## Ansprüche

1. Verfahren zur Herstellung von tertiären Alkylphosphanen der allgemeinen Formel $R_3P$, in der R gleiche oder verschiedene, geradkettige, unsubstituierte Alkylreste mit 3-20, vorzugsweise 4-10, C-Atomen bedeutet, wobei jedoch ein Alkylrest auch ein sekundärer Butylrest sein kann, durch Umsetzung von Phosphorwasserstoff $PH_3$ mit dem bzw. den entsprechenden Alkenen, gegebenenfalls in deren stöchiometrischem Überschuß, bei erhöhter Temperatur und erhöhtem Druck sowie in Gegenwart von Radikalbildnern, dadurch gekennzeichnet, daß unter Ausschluß eines artfremden Lösungsmittels und in Gegenwart von 2,2'-Azobis-(2-methylbutyronitril) als Radikalbildner gearbeitet wird, wobei in 2 Stufen gearbeitet wird, wenn der Alkylrest ein sekundärer Butylrest ist.

2. Verfahren nach Anspruch 1, dadurch gekennzeichnet, daß bei der Herstellung von tertiären Alkylphosphanen mit geradkettigen Alkylresten die Umsetzung von Alken-1 bzw. Alken-I-Gemischen mit $PH_3$ in einem stöchiometrischen Verhältnis von 3 : 1 bis 5 : 1, unter einem Druck von 1-80 bar, bei einer Temperatur von 75-95°C während einer mittleren Reaktionsdauer von 4-24 Stunden sowie in Gegenwart von 0,1-2 Mol% 2,2'-Azobis-(2-methylbutyronitril), bezogen auf $PH_3$, erfolgt, worauf das rohe Trialkylphosphan destillativ aufgearbeitet wird.

3. Verfahren nach Anspruch 1, dadurch gekennzeichnet, daß bei der Herstellung von tertiären Alkylphosphanen, bei welchen ein Alkylrest ein sekundärer Butylrest ist, in zwei Stufen gearbeitet wird, derart daß zunächst die Umsetzung von Buten-2 mit $PH_3$ in einem stöchiometrischen Überschuß von 0-400 Mol% Buten-2, bezogen auf $PH_3$, unter einem Druck von 35 bis 180 bar, bei einer Temperatur von 90-120°C während einer mittleren Reaktionsdauer von 0,1-7 Stunden sowie in Gegenwart von 1 -2 Mol% 2,2'-Azobis-(2-methylbutyronitril), bezogen auf $PH_3$, erfolgt, worauf das destillativ gereinigte s-Butylphosphan mit Alken-1 bzw. Alken-1-Gemischen in einem stöchiometrischen Überschuß von 0-1000 Mol% Gesamt-Alken-1, bezogen auf s-Butylphosphan, unter einem Druck von 1-3 bar, bei einer Temperatur von 75-95°C während einer mittleren Reaktionsdauer von 4-24 Stunden sowie in Gegenwart von 2-6 Mol% 2,2'-Azobis(2-methylbutyronitril), bezogen auf s-Butylphosphan, umgesetzt und das rohe s-Butyl-di-n-alkylphosphan destillativ aufgearbeitet wird.

4. Verfahren nach einem der Ansprüche 2 oder 3, dadurch gekennzeichnet, daß die Reaktions- und Destillationszonen kontinuierlich betrieben werden.

5. Verfahren nach einem der vorhergehenden Ansprüche, dadurch gekennzeichnet, daß das 2,2'-Azobis-(2-methylbutyronitril) im dem Ausgangsprodukt entsprechenden Alken bzw. im dem etwaigen Zwischenprodukt entsprechenden s-Butylphosphan gelöst eingesetzt wird.

6. Verfahren nach Anspruch 5, dadurch gekennzeichnet, daß das 2,2'-Azobis-(2-methylbutyronitril) als 0,01-3,0 gewichts%ige Lösung, vorzugsweise als die olefinische Lösung, eingesetzt wird.

7. Verfahren nach einem der Ansprüche 2 bis 6, dadurch gekennzeichnet, daß in den Destillationszonen abgetrennte, nicht umgesetzte Mengen an $PH_3$, Buten-2 oder Alken-1 in die jeweilige Reaktion zurückgeführt werden.


## Revendications

1. Procédé de préparation d'alkylphosphanes tertiaires de formule générale $R_3P$ dans laquelle les divers symboles R représentent des groupes alkyle identiques ou différents, non substitués, à chaîne droite en $C_3$-$C_{20}$, de préférence en $C_4$-$C_{10}$, un groupe alkyle pouvant toutefois consister en un groupe sec-butyle, par réaction du phosphure d'hydrogène $PH_3$ avec le ou les alcènes correspondants, éventuellement en excès stoechiométrique à température et pression élevées et en présence d'inducteurs radicalaires, caractérisé en ce que l'on opère en l'absence de solvant étranger et en présence de 2,2'-azo-bis-(2-méthylbutyronitrile) servant d'inducteur radicalaire, et, lorsque le groupe alkyle est un groupe sec-butyle, on travaille en deux étapes opératoires.

2. Procédé selon la revendication 1, caractérisé en ce que, à la préparation d'alkylphosphanes tertiaires à groupes alkyle à chaîne droite, la réaction entre l'alcène-1 ou le mélange d'alcènes-1 et $PH_3$ est effectuée dans des proportions stoechiométriques de 3 : 1 à 5 : 1, sous une pression de 1 à 80 bar, à une température de 75 à 95°C, avec une durée de réaction moyenne de 4 à 24 h et en présence de 0,1 à 2 mol% de 2,2'-azo-bis-(2-méthylbutyronitrile) par rapport à $PH_3$, après quoi le trialkylphosphane brut est traité par distillation.

3. Procédé selon la revendication 1, caractérisé en ce que, pour la préparation d'alkylphosphanes tertiaires dans lesquels un groupe alkyle est un groupe sec-butyle, on travaille en deux stades opératoires : on fait d'abord réagir le butène-2 avec $PH_3$ avec un excès stoechiométrique de 0 à 400 mol% de butène-2 par rapport à $PH_3$, sous une pression de 35 à 180 bar, à une température de 90 à 120°C dans une durée de réaction moyenne de 0,1 à 7 h et en présence de 1 à 2 mol% de 2,2'-azo-bis-(2-méthylbutyronitrile) par rapport à $PH_3$ puis on fait réagir le sec-butylphosphane purifié par distillation avec l'alcène-1 ou le mélange d'alcénes-1 en excès stoechiométrique de 0 à 1000 mol% d'alcènes-1 totaux par rapport au sec-butylphosphane sous une pression de 1 à 3 bar, à une température de 75 à 95°C avec une durée de réaction moyenne de 4 à 24 h, en présence de 2 à 6 mol% de 2,2'-azo-bis-(2-méthylbutyronitrile) par rapport au sec-butylphosphane puis on traite le sec-butyl-di-n-alkylphosphane brut par distillation.

4. Procédé selon l'une des revendications 2 ou 3, caractérisé en ce que les zones de réaction et de distillation opèrent en continu.

5. Procédé selon l'une des revendications qui précèdent, caractérisé en ce que le 2,2'-azo-bis-(2-méthylburyronitrile) est mis en oeuvre à l'état de solution dans l'alcène servant de produit de départ ou dans le sec-butylphosphane éventuellement formé en tant que produit intermédiaire.

6. Procédé selon la revendication 5, caractérisé en ce que le 2,2'-azo-bis-(2-méthylbutyronitrile) est mis en oeuvre à l'état de solution, de préférence de solution oléfinique, à une concentration de 0,01 à 3,0% en poids.

7. Procédé selon l'une des revendications 2 à 6, caractérisé en ce que les quantités de $PH_3$, de butène-2 ou d'alcène-1 non converties, séparées dans les zones de distillation, sont recyclées à la réaction appropriée.


## Claims

1. A process for the preparation of tertiary alkylphosphanes of the general formula $R_3P$, in which R are identical or different, straight-chain, unsubstituted alkyl radicals of 3-20, preferably 4-10, carbon atoms, it being possible, however, for one alkyl radical also to be a secondary butyl radical, by reaction of phosphorus hydride $PH_3$ with the corresponding alkene or alkenes, if appropriate with a stoichiometric excess thereof, at elevated temperature and elevated pressure and in the presence of free radical formers, which comprises working in the absence of a solvent of a different type and in the presence of 2, 2'-azobis (2-methylbutyronitrile) as free radical former, the process being carried out in 2 steps if the alkyl radical is a secondary butyl radical.

2. The process as claimed in claim 1, wherein, in the preparation of tertiary alkylphosphanes containing straight-chain alkyl radicals, the reaction of 1-alkene or 1-alkene mixtures with PH3 takes place in a stoichiometric ratio of 3 : 1 to 5 : 1, under a pressure of 1-80 bar, at a temperature of 75-95°C for an average reaction time of 4-24 hours and in the presence of 0.1-2 mol% of 2,2'-azobis(2-methylbutyronitrile), relative to PH$_3$, after which the crude trialkylphosphane is worked up by distillation.

3. The process as claimed in claim 1, wherein, in the preparation of tertiary alkylphosphanes in which one alkyl radical is a secondary butyl radical, the process is carried out in two steps in such a manner that first the reaction of 2-butene with PH$_3$ takes place in a stoichiometric excess of 0-400 mol% of 2-butene, relative to PH$_3$, under a pressure of 35 to 180 bar, at a temperature of 90-120°C for an average reaction time of 0.1-7 hours and in the presence of 1-2 mol% of 2,2'-azobis (2-methylbutyronitrile), relative to PH$_3$, after which the s-butylphosphane purified by distillation is reacted with 1-alkene or 1-alkene mixtures in a stoichiometric excess of 0-1,000 mol% of the overall amount of 1-alkene, relative to s-butylphosphane, under a pressure of 1-3 bar, at a temperature of 75-95°C for an average reaction time of 4-24 hours and in the presence of 2-6 mol% of 2,2'-azobis(2-methylbutyronitrile), relative to s-butylphosphane, and the crude s-butyldi-n-alkylphosphane is worked up by distillation.

4. The process as claimed in one of claims 2 or 3, wherein the reaction and distillation zones are operated continuously.

5. The process as claimed in one of the preceding claims, wherein the 2,2'-azobis(2-methylbutyronitrile) is used dissolved in the alkene which corresponds to the starting material or in the s-butylphosphane which corresponds to the intermediate which may have been formed.

6. The process as claimed in claim 5, wherein the 2, 2'-azobis (2 -methylbutyronitrile) is used as a 0. 01 - 3. 0 percent by weight solution, preferably as the olefinic solution.

7. The process as claimed in any one of claims 2 to 6, wherein unconverted amounts of PH$_3$, 2-butene or 1-alkene which have been separated off in the distillation zones are recycled into the particular reaction.